# EUROPÄISCHE PATENTANMELDUNG

(11) **EP 1 844 967 A1**
(43) Veröffentlichungstag der Anmeldung: **17.10.2007**
(21) Anmeldenummer: 06007097.6
(22) Anmeldetag: 04.04.2006
(51) Int. Cl.: B60J 7/043, B60J 7/057

(54) **Schiebedachsystem**

(71) Anmelder: ArvinMeritor GmbH, 63128 Dietzenbach (DE)
(72) Erfinder: Stallfort, Klaus, 61273 Wehrheim (DE)
(74) Vertreter: Sties, Jochen

(57) **Zusammenfassung**

Ein Schiebedachsystem für einen eine Öffnung verschießenden Deckel (14) hat mindestens eine Führungsschiene (16), einen Dekkelhalter (18) und einen Schlitten (24), der in der Führungsschiene (16) verstellbar ist und mit dem der Deckelhalter (18) verbunden ist. Ein Verriegelungselement (22) ist vorgesehen, das an dem Deckelhalter (18) angreift und diesen verriegeln oder freigeben kann.

## Beschreibung

Die Erfindung betrifft ein Schiebedachsystem mit mindestens einer Führungsschiene, einem Deckelhalter und einem Schlitten, der in der Führungsschiene verstellbar ist und mit dem der Deckelhalter verbunden ist.

Schiebedachsysteme sind allgemein bekannt. Sie dienen dazu, mindestens einen Deckel (bestehend beispielsweise aus Blech, Kunststoff oder Glas) zwischen einer geschlossen und einer geöffneten Stellung zu verstellen. In der geschlossenen Stellung wird eine Öffnung in einem Fahrzeugdach verschlossen. In der geöffneten Stellung des Deckels wird diese Öffnung mehr oder weniger freigegeben. Der Deckel kann ferner eine Lüfterstellung einnehmen, in der die Hinterkante des Deckels ausgestellt und die Vorderkante des Deckels in der abgesenkten Stellung blockiert ist.

Aus der DE 10 2004 018 461 ist ein Schiebedachsystem bekannt, bei dem zwei Verstellhebel vorgesehen sind. Beim Öffnen des Deckels verhindert ein vorderer Verstellhebel das Ausstellen der Vorderkante des Deckels, während ein hinterer Verstellhebel die Hinterkante des Deckels ausstellt. Der vordere Verstellhebel kann anschließend die Vorderkante des Deckels freigeben und so ein Ausstellen der Vorderkante zulassen.

Die Aufgabe der Erfindung besteht darin, ein Schiebedachsystem der eingangs genannten Art zu schaffen, das eine einfachere Verriegelung der Vorderkante des Deckels ermöglicht.

Zur Lösung dieser Aufgabe ist bei einem Schiebedachsystem der eingangs genannten Art ein Verriegelungselement vorgesehen, das an dem Deckelhalter angreifen und diesen verriegeln oder freigeben kann. Das Verriegelungselement verriegelt den Deckel, insbesondere eine Vorderkante des Deckels, in der geschlossenen Stellung und in der Lüfterstellung und verhindert eine Bewegung der Vorderkante in z-Richtung. Im Stand der Technik war dafür ein zweiter Verstellhebel notwendig, der nun entfällt, wodurch die Konstruktion einfacher und kostengünstiger ist und ein Einklemmen eines Fahrzeuginsassen unwahrscheinlicher ist.

Vorzugsweise ist das Verriegelungselement an den Schlitten gekoppelt. Es ist also kein separater Schlitten notwendig, was zu Kostenersparnissen führt.

Vorzugsweise ist ein Gleiter vorgesehen, der mehrfach in der Führungsschiene gelagert ist. Die mehrfache (z.B. zweifache) und somit stabile Lagerung des Gleiters, an dem das Verriegelungselement angreift, verhindert eine Bewegung des Verriegelungselements in z-Richtung und ermöglicht so eine sichere Verriegelung des Deckels, insbesondere der Vorderkante des Deckels.

Bevorzugt ist wenigstens ein federelastisches Element vorgesehen. Das federelastische Element kann zwischen dem Verriegelungselement und dem Schlitten, an der Hubkulisse bzw. am vorderen Bereich des Verriegelungselements vorgesehen sein. Das Schiebedachsystem kann so gänzlich spielfrei in horizontaler Richtung ausgeführt werden.

Gemäß einer Ausführungsform ist der Deckelhalter direkt mit dem Schlitten verbunden, d.h. es ist kein hinterer Verstellhebel vorgesehen. Dadurch sind weniger Teile erforderlich, was das Schiebedachsystem kostengünstig macht.

Gemäß einer weiteren Ausführungsform ist ein Verstellhebel vorgesehen, der den Deckelhalter mit dem Schlitten verbindet. Der Verstellhebel des Schiebedachsystems erzeugt eine gewünschte, erforderliche Hubbewegung aufgrund seiner unmittelbaren Koppelung mit dem Schlitten. Somit kann ein Schiebedachsystem mit einer geringen Bauhöhe erzielt werden.

Weitere Merkmale und Vorteile ergeben sich aus den Unteransprüchen.

Die Erfindung wird nachfolgend anhand von Ausführungsformen beschrieben, die in den Zeichnungen dargestellt sind. In den Zeichnungen zeigen:
- Figur 1 eine schematische, perspektivische Ansicht eines Fahrzeugdaches mit einem erfindungsgemäßen Schiebedachsystem,
- Figur 2 eine schematische Ansicht einer Führungsschiene mit darin angeordneten Bauteilen eines erfindungsgemäßen Schiebedachsystems gemäß einer ersten Ausführungsform, wobei sich ein Deckel in einer geschlossenen Stellung befindet,
- Figur 3 eine Figur 2 entsprechende Ansicht, wobei sich der Deckel in einer Lüfterstellung befindet,
- Figur 4 eine Figur 2 entsprechende Ansicht, wobei sich der Deckel in einer vollständig nach außen ausgestellten Stellung befindet,
- Figur 5 eine Schnittansicht entlang der Linie V-V in Figur 4,
- Figur 6 eine schematische Ansicht einer Führungsschiene mit darin angeordneten Bauteilen eines erfindungsgemäßen Schiebedachsystems gemäß einer zweiten Ausführungsform, wobei sich der Deckel in der geschlossenen Stellung befindet,
- Figur 7 eine Figur 6 entsprechende Ansicht, wobei sich der Deckel in der Lüfterstellung befindet,
- Figur 8 eine Figur 6 entsprechende Ansicht, wobei sich der Deckel in einer vollständig nach außen ausgestellten Stellung befindet,
- Figur 9 einen vergrößerten Ausschnitt des mit X bezeichneten Bereichs in Figur 6 mit einem Federelement in einer ersten Variante,
- Figur 10 einen vergrößerten Ausschnitt des mit Y bezeichneten Bereichs in Figur 6 mit einem Federelement in einer zweiten Variante,
- Figur 11 einen vergrößerten Ausschnitt des mit Y bezeichneten Bereichs in Figur 6 mit einem Federelement in einer dritten Variante, und
- Figur 12 eine schematische Ansicht einer Führungsschiene mit darin angeordneten Bauteilen eines erfindungsgemäßen Schiebedachsystems gemäß einer dritten Ausführungsform, wobei sich der Deckel in der geschlossenen Stellung befindet.

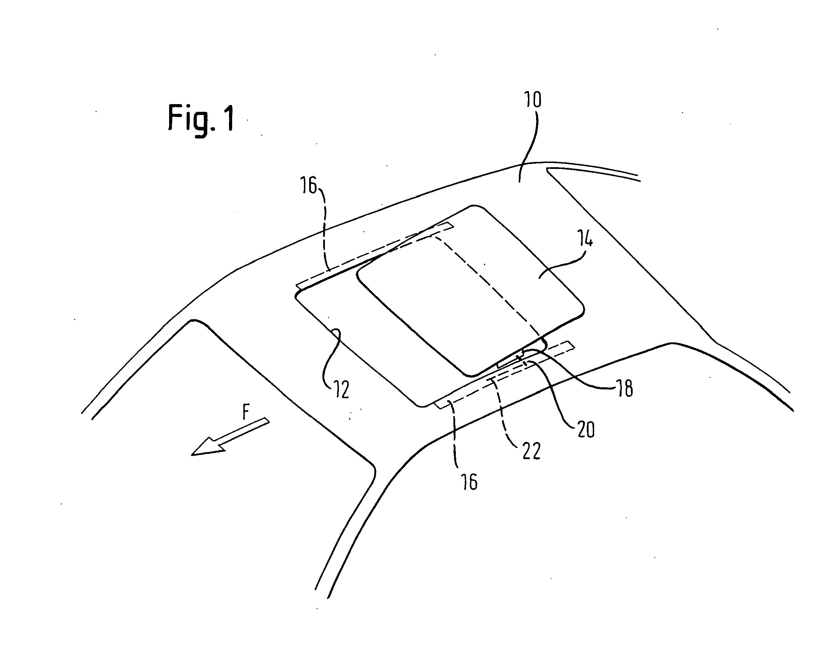

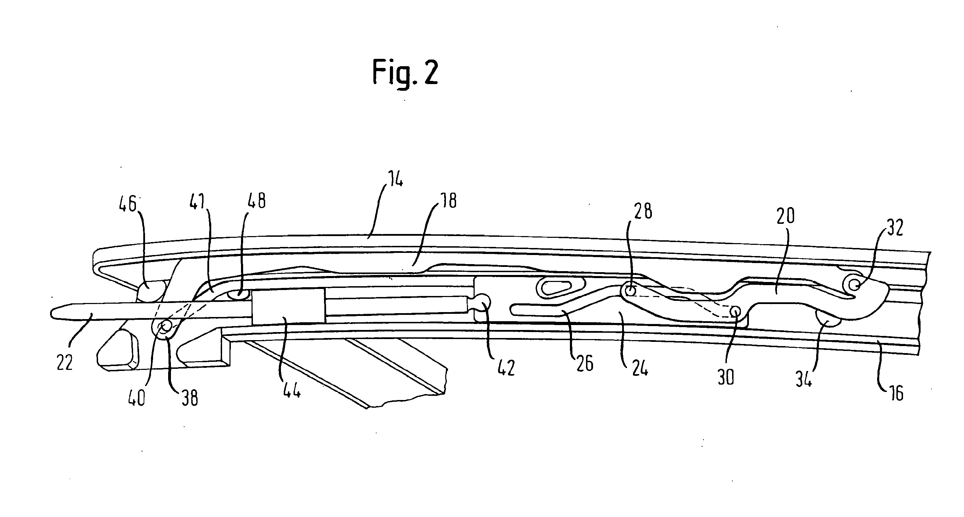

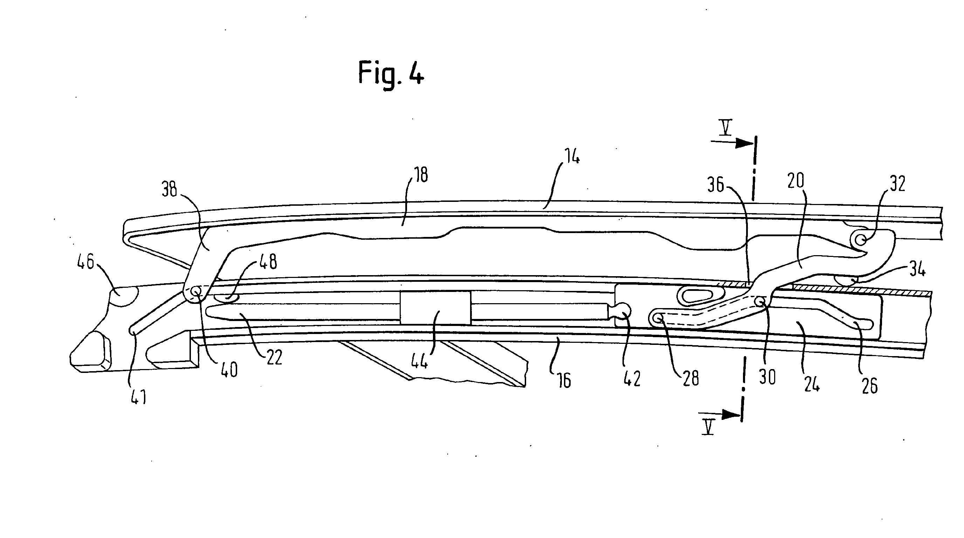

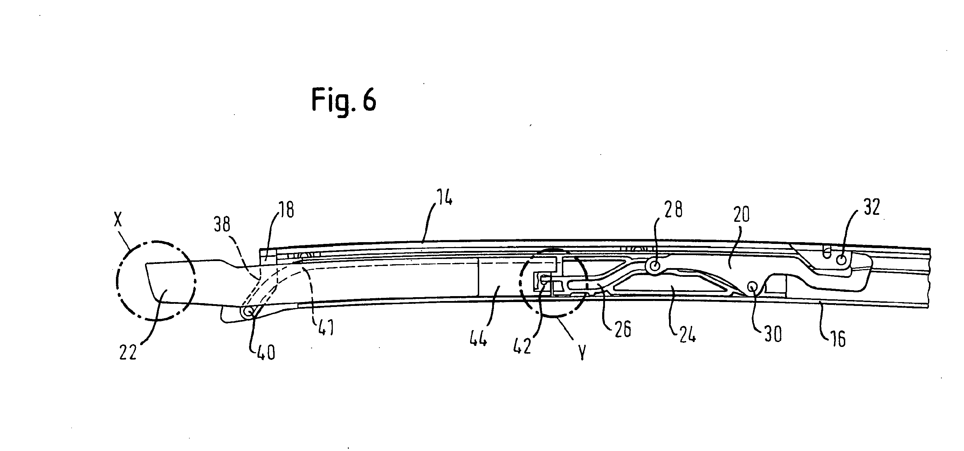

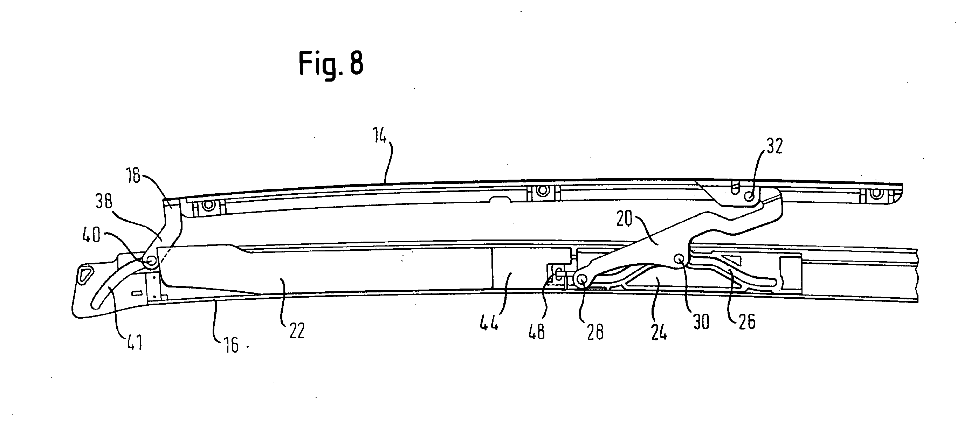

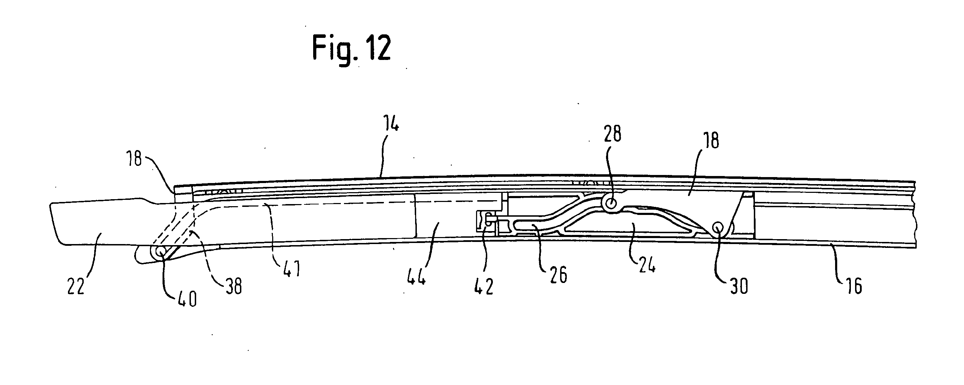

In Figur 1 ist ein Fahrzeugdach 10 gezeigt, das mit einer Öffnung 12 versehen ist. Der Öffnung 12 ist ein Deckel 14 zugeordnet, der zwischen einer geschlossenen Stellung, in welcher er die Öffnung 12 verschließt, und einer geöffneten Stellung bewegbar ist. Dem Deckel 14 ist ein Schiebedachsystem zugeordnet, dessen wesentliche Bestandteile zwei Führungsschienen 16, zwei Deckelhalter 18 und zwei Verriegelungselemente 22 sind, die an dem Deckelhalter 18 angreifen und diesen in z-Richtung verriegeln oder freigeben können. Figur 1 zeigt ferner zwei Verstellhebel 20, die Bestandteile der ersten (Figur 2 bis 5) und zweiten (Figur 6 bis 11) Ausführungsform sind. Die in Figur 12 gezeigte dritte Ausführungsform hingegen hat keine Verstellhebel 20.

Im folgenden wird auf die in den Figuren 2 bis 5 gezeigte erste Ausführungsform eingegangen:

Die Deckelhalter 18 sind hier als separate Bauteile ausgeführt, die fest am Deckel 14 angebracht sind. Sie können aber auch durch Einlegeteile gebildet sein, die in den Deckel 14 beispielsweise eingegossen sind, oder durch einstückig mit dem Deckel 14 ausgebildete Befestigungslaschen.

Die beiden Führungsschienen 16 erstrecken sich entlang den Längsrändern der Öffnung 12, also bezogen auf die Fahrtrichtung F des Fahrzeug betrachtet von vorne nach hinten. Üblicherweise sind sie durch ein Profil aus einer Aluminiumlegierung gebildet. In jeder Führungsschiene 16 ist ein Schlitten 24 (siehe Figur 2) verschiebbar angeordnet. Mit dem Schlitten 24 ist ein nicht dargestelltes Antriebsmittel gekoppelt, beispielsweise ein schub- und zugfestes Metallkabel, welches von einem Antriebsmotor (nicht dargestellt) angetrieben wird. Der Schlitten 24 besteht üblicherweise aus Kunststoff. Da der Schlitten 24 relativ kurz ausgebildet ist, kann er bei unterschiedlich gekrümmten Führungsschienen 16 eingesetzt werden.

Mit dem Schlitten 24 ist der Verstellhebel 20 gekoppelt, wobei zur Kopplung eine Kulissenführung verwendet wird. Die Kulissenführung ist gebildet durch eine Hubkulisse 26 im Schlitten 24, in die Stifte 28, 30 eingreifen, die am Verstellhebel 20 vorgesehen sind. Die Hubkulisse 26 ist am (bezogen auf die Fahrtrichtung F des Fahrzeugs) hinteren Ende des Schlittens 24 angeordnet und verläuft von vorne nach hinten betrachtet zunächst waagrecht, dann steigt sie nach oben an, anschließend verläuft sie wieder waagrecht und fällt schließlich schräg nach unten ab.

Am vorderen Ende des als flache Leiste ausgebildeten Verstellhebels 20 ist der Stift 28 angeordnet. Der Stift 30 befindet sich (bezogen auf die Fahrtrichtung F) hinter dem Stift 28. Der Abstand zwischen den beiden Stiften 28, 30 ist kleiner als die Hälfte der Länge des Verstellhebels 20. An seinem vom Stift 28 entgegengesetzten, hinteren Ende ist der Verstellhebel 20 durch einen Bolzen 32 mit dem Deckelhalter 18 verbunden.

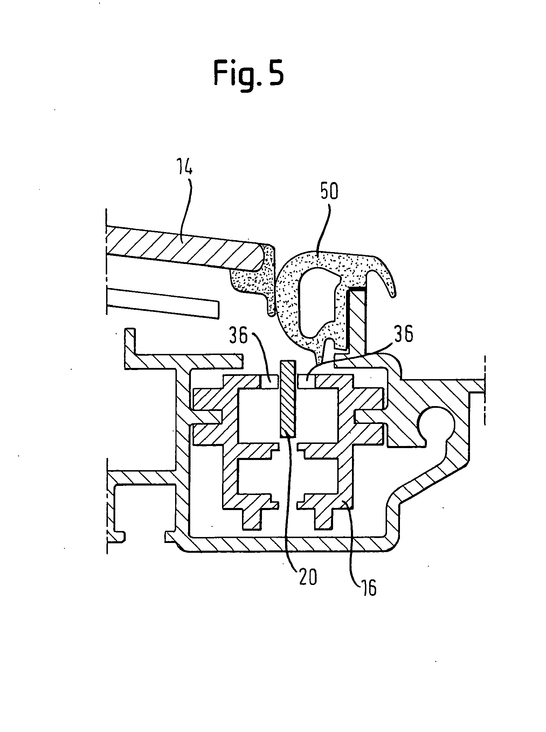

Zwischen dem Bolzen 32 und dem Stift 30 hat der Verstellhebel 20 einen Quersteg 34, wobei der Quersteg 34 durch eine Aussparung 36 (vgl. Figur 5) in der Führungsschiene 16 gelangen kann, wenn der Verstellhebel 20 ausgestellt bzw. abgesenkt wird. Der Quersteg 34 kann auf der Oberkante der Führungsschiene 16 aufliegen.

Am vorderen Ende des Schlittens 24 ist das hintere Ende des Verriegelungselements 22 mittels eines Gelenks 42, das z.B. als Kugelgelenk oder Schwenkgelenk ausgeführt ist, gekoppelt. Das Verriegelungselement 22 kann am Deckelhalter 18, insbesondere an einem Führungsstift 40 des Deckelhalters 18, angreifen und diesen verriegeln oder freigeben. Der Führungsstift 40 ist am unteren Ende einer Führungslasche 38 angebracht, wobei die Führungslasche 38 am vorderen Ende des Deckelhalters 18 vorgesehen ist. Der Führungsstift 40 greift in eine Führungskulisse 41, die sich ausgehend vom vorderen Ende der Führungsschiene 16 zunächst schräg nach oben hinten und anschließend geradlinig entlang der Führungsschiene 16 erstreckt.

Ein Gleiter 44 greift mittig an dem Verriegelungselement 22 an, der in der Führungsschiene 16 verschiebbar ist. Der Gleiter 44 hat kein eigenes Antriebsmittel, sondern ist aufgrund der Verbindung über das Verriegelungselement 22 mit dem Schlitten 24 in der Führungsschiene 16 verschiebbar. Genausogut könnte der Gleiter 44 ein eigenes Antriebsmittel haben (nicht gezeigt).

Am vorderen Ende der Führungsschiene 16 sind Widerlager 46, 48 vorgesehen, wobei das Widerlager 48 in Fahrtrichtung F gesehen hinter dem Widerlager 46 und der Führungskulisse 41 angebracht ist. Das Verriegelungselement 22 kann an den Widerlagern 46, 48 angreifen.

In Figur 2 ist der Schlitten 24 in einer Position gezeigt, die der geschlossenen Stellung des Deckels 14 entspricht. Der Schlitten 24 ist vollständig nach vorne geschoben, so daß sich der Stift 30 am hinteren Ende der Hubkulisse 26 befindet. Der Führungsstift 40 des Deckelhalters 18 befindet sich am vorderen, unteren Ende der Führungskulisse 41. Das Verriegelungselement 22 ist durch den Schlitten 24 vollständig nach vorne geschoben und befindet sich zwischen den Widerlagern 46, 48 und dem Führungsstift 40 des Deckelhalters 18 und verhindert so eine Bewegung des Führungsstiftes 40 und damit des vorderen Randes des Deckels 14 in vertikaler Richtung. In dieser Position ist der Deckelhalter 18 und damit der Deckel 14 in seiner geschlossenen Stellung verriegelt.

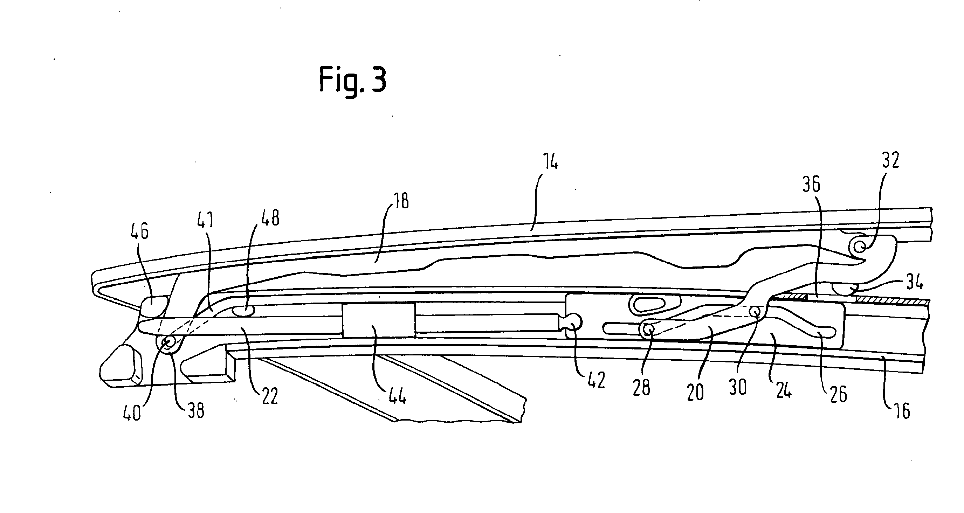

Wenn der Deckel 14 geöffnet wird, wird der Schlitten 24 aus der in Figur 2 gezeigten Position nach hinten in die in Figur 3 gezeigte Position verstellt. Dies bewirkt, daß das hintere Ende des Verstellhebels 20, der mit dem Deckelhalter 18 verbunden ist, nach oben geschwenkt wird, da der Stift 30 in der Hubkulisse 26 nach oben bewegt wird, während der Stift 28 des Verstellhebels 20 nach unten bewegt wird. Der Verstellhebel 20 führt also eine Schwenkbewegung um einen Punkt aus, der zwischen den beiden Stiften 28, 30 liegt. Dadurch wird das hintere Ende des Deckelhalters 18 angehoben, und der Quersteg 34 des Verstellhebels 20 gelangt durch die Aussparung 36 in der Führungsschiene 16 und liegt auf der Oberkante der Führungsschiene 16 auf.

Durch das Verstellen des Schlittens 24 wird das gelenkig daran gekoppelte Verriegelungselement 22 und der Gleiter 44 ebenfalls nach hinten bewegt. Die Länge des Verriegelungselements 22 ist dabei so gewählt, daß der Führungsstift 40 des Deckelhalters 18 weiterhin verriegelt ist. Der Führungsstift 40 ist so weiterhin an einer Bewegung in vertikaler Richtung verhindert.

Die in Figur 3. gezeigte Stellung wird üblicherweise als Lüfterstellung bezeichnet, da nur der hintere Rand des Deckels 14 angehoben ist, so daß eine Belüftung des Fahrzeuginnenraums durch den entstehenden Spalt erzielt ist.

Wenn der Deckel 14 weiter geöffnet werden soll, wird der Schlitten 24 weiter nach hinten verschoben. Dabei verbleibt der Verstellhebel 20 im wesentlichen in seiner aus Figur 2 bekannten Stellung, während die Führungslasche 38 des Dekkelhalters 18 angehoben wird. Dies ist insbesondere darauf zurückzuführen, daß der Führungsstift 40 von dem Verriegelungselement 22 freigegeben worden ist, so daß der Führungsstift 40 in der Führungskulisse 41 angehoben wird, bis er in den waagrecht verlaufenden Abschnitt der Führungskulisse 41 eintritt.

Die Führungslasche 38 kann nach der Freigabe durch das Verriegelungselement 22 vom Schlitten 24 nach hinten verschoben werden, so daß der Deckel 14 die Öffnung 12 im Fahrzeugdach 10 vollständig freigibt. Dabei wird der Quersteg 34 des Verstellhebels 20 ebenfalls nach hinten bewegt und ist von der Aussparung 36 entfernt, so daß der hintere Rand des Deckels 14 in der ausgestellten Stellung bleibt.

Wenn der Deckel 14 wieder geschlossen werden soll, wird der Schlitten 24 nach vorne verstellt, woraufhin sich der umgekehrte Bewegungsablauf des Verstellhebels 20, des Gleiters 44 und des Verriegelungselements 22 ergibt, bis der Deckel 14 in seiner geschlossenen Stellung angelangt ist, in der der Deckelhalter 18 von dem Verriegelungselement 22 verriegelt ist.

Das Verriegelungselement 22 kann den Deckelhalter 18 verriegeln und freigeben. Das Verriegelungselement 22 ersetzt dadurch einen vorderen Verstellhebel. Da nur ein Verstellhebel 20 vorgesehen ist, muß auch nur ein Hebel eine Dichtung 50 (Figur 5), die die Dachöffnung umgibt, durchdringen, so daß weniger Reibung auftritt.

Im folgenden wird auf die zweite Ausführungsform eingegangen, die in den Figuren 6 bis 11 gezeigt ist. Für die von der ersten Ausführungsform bekannten Bauteile werden dieselben Bezugszeichen verwendet, und es wird insoweit auf die obigen Erläuterungen verwiesen.

Die zweite Ausführungsform unterscheidet sich von der ersten Ausführungsform insbesondere darin, daß keine Widerlager 46, 48 vorgesehen sind, die mit dem Verriegelungselement 22 zusammenwirken. Darüber hinaus ist kein Quersteg 34 am Verstellhebel 20 vorgesehen.

Das Verriegelungselement 22 ist auch hier gelenkig (Gelenk 42) an den Schlitten 24 gekoppelt. Der Gleiter 44, der in der Führungsschiene 16 verstellbar ist und an dem das Verriegelungselement 22 angreift, ist in dieser Ausführungsform mehrfach, insbesondere zweifach, gelagert. Das Verriegelungselement 22 wirkt statisch als ein auf zwei Stützen gelagerter Kragarm. Die zweifache Lagerung führt dazu, daß das Verriegelungselement 22 starr und in z-Richtung unverschieblich ist. Das Verriegelungselement 22 kann so den Führungsstift 40 des Deckelhalters 18 in z-Richtung verriegeln oder freigeben.

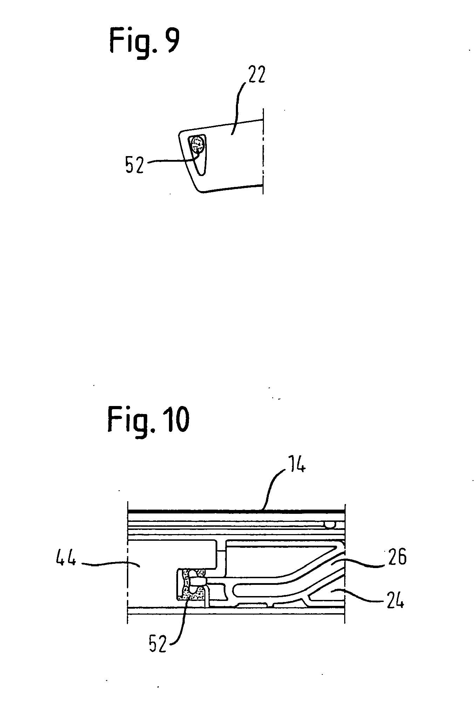

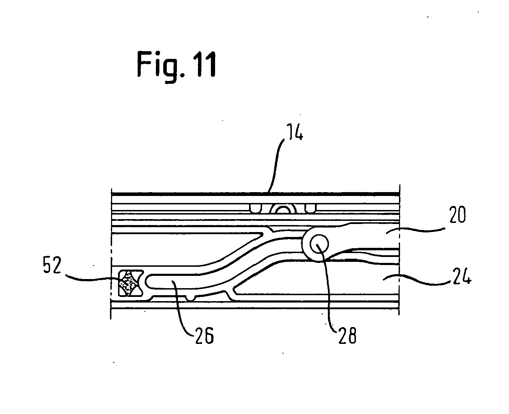

Im Gegensatz zur ersten Ausführungsform sind ein oder mehrere federelastische Elemente 52 (siehe Figuren 9 bis 11) vorgesehen. Die federelastischen Elemente 52 sind z.B. als Bogenfeder ausgebildet und am vorderen Ende des Verriegelungselements 22 (siehe die in Figur 9 gezeigte Variante), zwischen dem Verriegelungselement 22 und dem Schlitten 24 (siehe die in Figur 10 gezeigte Variante) bzw. an der Hubkulisse 26 (siehe die in Figur 11 gezeigte Variante) vorgesehen und ermöglichen, das Schiebedachsystem in horizontaler Richtung gänzlich spielfrei auszuführen.

Die Funktionsweise des Schiebedachsystems entspricht im wesentlichen der der ersten Ausführungsform. Die Funktionsweise unterscheidet sich nur darin, daß das Verriegelungselement 22 in allen Stellungen des Deckels 14 am Führungsstift 40 angreift.

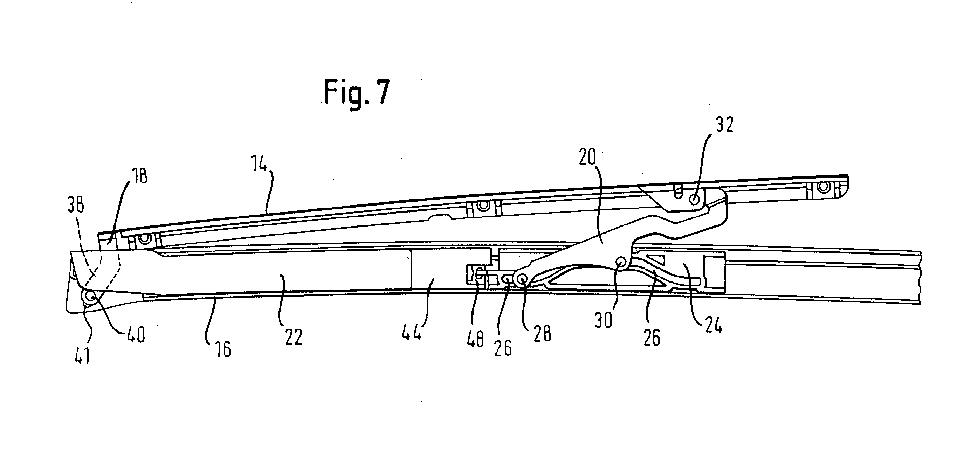

Wenn der Deckel 14 geöffnet wird, wird der Schlitten 24 aus der in Figur 6 gezeigten Position nach hinten in die in Figur 7 gezeigte Position verstellt. Das hintere Ende des Verstellhebels 20, der mit dem Deckelhalter 18 verbunden ist, wird dabei nach oben geschwenkt, da der Stift 30 in der Hubkulisse 26 nach oben bewegt wird, während der Stift 28 des Verstellhebels 20 nach unten bewegt wird. Der Verstellhebel 20 führt also eine Schwenkbewegung aus, und das hintere Ende des Deckelhalters 18 wird angehoben.

Durch das Verstellen des Schlittens 24 wird das gelenkig daran gekoppelte, mehrfach gelagerte, starre Verriegelungselement 22 und der Gleiter 44 ebenfalls nach hinten bewegt. Die Länge und die Starrheit des Verriegelungselements 22 führen dazu, daß der Führungsstift 40 des Deckelhalters 18 weiterhin an einer Bewegung in z-Richtung gehindert wird.

Wenn der Deckel 14 weiter geöffnet werden soll, wird der Schlitten 24 weiter nach hinten verschoben. Dabei verbleibt der Verstellhebel 20 im wesentlichen in seiner aus Figur 7 bekannten Stellung, während die Führungslasche 38 des Dekkelhalters 18 angehoben wird. Dies ist insbesondere darauf zurückzuführen, daß der Führungsstift 40 von dem Verriegelungselement 22 freigegeben worden ist, so daß der Führungsstift 40 in der Führungskulisse 41 angehoben wird, bis er in den waagrecht verlaufenden Abschnitt der Führungskulisse 41 eintritt. "Freigegeben" bedeutet hier, daß das Verriegelungselement 22 zwar immer noch an dem Führungsstift 40 angreift, die Länge des Verriegelungselements 22 jedoch so gewählt ist, daß dieser sich in der Führungskulisse 41 verstellt.

Die Führungslasche 38 kann nach der Freigabe durch das Verriegelungselement 22 vom Schlitten 24 nach hinten verschoben werden, so daß der Deckel 14 die Öffnung 12 im Fahrzeugdach 10 vollständig freigibt.

Wenn der Deckel 14 wieder geschlossen werden soll, wird der Schlitten 24 nach vorne verstellt, woraufhin sich der umgekehrte Bewegungsablauf des Verstellhebels 20, des Gleiters 44 und des Verriegelungselements 22 ergibt, bis der Deckel 14 in seiner geschlossenen Stellung angelangt ist, in der der Deckelhalter 18 von dem Verriegelungselement 22 verriegelt ist.

Im folgenden wird auf die in Figur 12 schematisch gezeigte dritte Ausführungsform eingegangen. Für die bereits bekannten Bauteile werden dieselben Bezugszeichen verwendet, und es wird insoweit auf obige Erläuterungen verwiesen.

Die dritte Ausführungsform unterscheidet sich von der zweiten Ausführungsform nur darin, daß der Verstellhebel 20 entfällt, da der Deckelhalter 18 direkt am Schlitten 24 angreift, d.h. die am Deckelhalter 18 angebrachten Stifte 28, 30 greifen in die Hubkulisse 26 des Schlittens 24 ein. Da der Verstellhebel 20 entfällt, muß der Hub des Deckels 14 allein durch die Hubkulisse 26 bewirkt werden, wodurch sich die Bauhöhe des Schiebedachsystems erhöht. Das so ausgebildete Schiebedachsystem hat aber weniger Bauteile.

Die Funktionsweise unterscheidet sich von der Funktionsweise der zweiten Ausführungsform nur darin, daß die Ausstellbewegung des Deckels 14 nicht über einen Verstellhebel hervorgerufen wird, sondern allein durch die Hubkulisse 26.

Ferner ist eine Kombination der Ausführungsformen möglich. Beispielsweise könnte der Gleiter 44 der ersten Ausführungsform auch mehrfach gelagert sein oder der Verstellhebel 20 der ersten Ausführungsform entfallen.

Das Verriegelungselement 22 und der Schlitten 24 beider Seiten der Öffnung 12 können getrennt an den Führungsschienen 16 angebracht werden oder als gemeinsame vormontierte Einheit.

### Bezugszeichenliste

- 10: Fahrzeugdach
- 12: Öffnung
- 14: Deckel
- 16: Führungsschiene
- 18: Deckelhalter
- 20: Verstellhebel
- 22: Verriegelungselement
- 24: Schlitten
- 26: Hubkulisse
- 28, 30: Stift
- 32: Bolzen
- 34: Quersteg
- 36: Aussparung
- 38: Führungslasche
- 40: Führungsstift
- 41: Führungskulisse
- 42: Gelenk
- 44: Gleiter
- 46, 48: Widerlager
- 50: Dichtung
- 52: federelastisches Element

## Patentansprüche

1. Schiebedachsystem,
mit mindestens einer Führungsschiene (16),
einem Deckelhalter (18) und
einem Schlitten (24), der in der Führungsschiene (16) verstellbar ist und mit dem der Deckelhalter (18) verbunden ist,
**dadurch gekennzeichnet, daß** ein Verriegelungselement (22) vorgesehen ist, das an dem Deckelhalter (18) angreifen und diesen verriegeln oder freigeben kann.

2. Schiebedachsystem nach Anspruch 1, **dadurch gekennzeichnet, daß** der Deckelhalter (18) einen Führungsstift (40) hat, an dem das Verriegelungselement (22) angreifen kann.

3. Schiebedachsystem nach Anspruch 1 oder 2, **dadurch gekennzeichnet, daß** das Verriegelungselement (22) an den Schlitten (24) gekoppelt ist.

4. Schiebedachsystem nach einem der vorhergehenden Ansprüche, **dadurch gekennzeichnet, daß** das Verriegelungselement (22) mittels eines Gelenks (42) an den Schlitten (24) gekoppelt ist.

5. Schiebedachsystem nach einem der vorhergehenden Ansprüche, **dadurch gekennzeichnet, daß** ein Gleiter (44) vorgesehen ist, der in der Führungsschiene (16) verstellbar ist und an dem das Verriegelungselement (22) angreift.

6. Schiebedachsystem nach Anspruch 5, **dadurch gekennzeichnet, daß** der Gleiter (44) mehrfach in der Führungsschiene (16) gelagert ist.

7. Schiebedachsystem nach einem der vorhergehenden Ansprüche, **dadurch gekennzeichnet, daß** das Verriegelungselement (22) so ausgebildet ist, daß der Führungsstift (40) am Deckelhalter (18) in allen Stellungen am Verriegelungselement (22) angreift.

8. Schiebedachsystem nach einem der vorhergehenden Ansprüche, **dadurch gekennzeichnet, daß** wenigstens ein federelastisches Element (52) vorgesehen ist.

9. Schiebedachsystem nach einem der vorhergehenden Ansprüche, **dadurch gekennzeichnet, daß** mindestens ein Widerlager (46, 48) an der Führungsschiene (16) vorgesehen ist, mit dem das Verriegelungselement (22) zusammenwirken kann.

10. Schiebedachsystem nach einem der vorhergehenden Ansprüche, **dadurch gekennzeichnet, daß** der Deckelhalter (18) direkt mit dem Schlitten (24) verbunden ist.

11. Schiebedachsystem nach einem der Ansprüche 1 bis 9, **dadurch gekennzeichnet, daß** ein Verstellhebel (20) vorgesehen ist, der den Deckelhalter (18) mit dem Schlitten (24) verbindet.

12. Schiebedachsystem nach Anspruch 11, **dadurch gekennzeichnet, daß** der Verstellhebel (20) als flache Leiste ausgebildet ist.

13. Schiebedachsystem nach Anspruch 11 oder 12, **dadurch gekennzeichnet, daß** der Verstellhebel (20) einen Quersteg (34) und die Führungsschiene (16) eine Aussparung (36) aufweist, wobei der Quersteg (34) durch die Aussparung (36) gelangen kann und so der Verstellhebel (20) von einer abgesenkten in eine ausgestellte Stellung und umgekehrt gelangen kann.
